# EUROPÄISCHE PATENTSCHRIFT

(11) **EP 2 762 790 B1**
(45) Veröffentlichungstag und Bekanntmachung des Hinweises auf die Patenterteilung: **07.06.2017**
(21) Anmeldenummer: 14401008.9
(22) Anmeldetag: 31.01.2014
(51) Int. Cl.: F24D 19/10, G05D 23/19

(54) **Anordnung zur elektronischen Regelung für die Wassererwärmung mit Plattenwärmetauscher**
Assembly for electronic control of heating water by means of a plate heat exchanger
Système pour une régulation électronique de la production d'eau chaude via un échangeur de chaleur à plaques

(30) Priorität: 01.02.2013 DE 102013101026
(43) Veröffentlichungstag der Anmeldung: 06.08.2014
(73) Patentinhaber: Petrick, Nico, 01099 Dresden (DE); Petrick, Robin, 02979 Elsterheide (DE)
(72) Erfinder: Petrick, Nico, 01099 Dresden (DE); Petrick, Robin, 02979 Elsterheide (DE)
(74) Vertreter: Weissfloh, Ingo

(56) Entgegenhaltungen:
- EP-A1- 0 608 195
- WO-A1-01/42729
- WO-A1-2006/027247
- DE-A1- 19 904 937
- GB-A- 2 382 646

## Beschreibung

Die Erfindung betrifft eine Anordnung zur elektronischen Regelung für die Wassererwärmung über Plattenwärmetauscher, welche sich insbesondere auf die Anwendung der Wassererwärmung mit einer Zirkulationsleitung konzentriert.

Aus dem Stand der Technik sind elektronische Anordnungen zur elektronischen Regelung von Wasseranwendungen über Plattenübertrager bekannt. Derzeit werden die elektronischen Regelungen dahingehend verwendet, dass im Sekundärbereich ein erster Temperaturmessfühler im Anschlussbereich des Vorlaufes der Sekundärseite angeordnet ist. Dabei wird die Regelung des primären Volumenstroms mittels PID-Algorithmus durchgeführt. Bei Lastenänderung auf der Sekundärseite im Sekundenbereich und/oder Temperatur- und/oder Differenzdruckänderung auf der Primärseite führt dies zu Über- und Unterschwingen des Temperaturwertes.

Um diesen Temperaturschwingungen entgegen zu wirken, wird auf der Sekundärseite ein zusätzlicher Sensor zur Strömungserkennung installiert, und die Regelung berücksichtigt jetzt auch diesen Wert. Dabei wird ein Regler bekannter Bauart im PID-Verhalten eingesetzt. Diesseitige Sensoren im sekundären Rücklauf sind Ultraschall-, Flügelrad-, Turbinen-, Paddel- bzw. Strömungsschalter oder Kalorimeter. Es wird praktisch aus dem Temperaturwert über den Temperaturfühler und dem Volumenstromsignal ein Signal für das primäre Stellglied über den Regler generiert.

So offenbart die DE 199 04 937 A1 ein Verfahren und eine Anordnung zur Regelung der Warmwassertemperatur in Heizungsanlagen, wobei am primären und sekundären Vor- und Rücklauf eines Wärmetauschers Temperaturfühler angeordnet sind und mit einer Regelung verbunden sind und das zudem eine Einrichtung zur Volumenstrommessung in Form eines Differenzdruckmessers zwischen dem sekundären Vor- und Rücklauf vorhanden ist, welche ebenfalls mit der Regelung verbunden ist, mit dem Ziel eine möglichst konstante Warmwassertemperatur am sekundären Vorlauf des Wärmetauschers zu erreichen, wobei die Regelung sehr schnell erfolgen soll. Nachteilig an dieser recht theoretischen Betrachtung ist es, dass übermäßig viele Bauteile zum Einsatz kommen, welche zu einem erhöhten Aufwand bei der Umsetzung zu hohen Kosten führen und zudem ein keinen Vorteil hinsichtlich der Ausfallsicherheit bieten.

Die WO2006/027247 A1 offenbart einen multifunktionalen Sandwichrahmen für Anlagenaufbauten, welche thermisch beaufschlagte Medien beinhalten, bei welcher unter anderem beschrieben wird, dass am sekundären Vor- und Rücklauf eines Wärmetauschers Temperaturfühler vorgesehen sind. Hierbei wird jedoch nur angegeben das Temperaturfühler vorhanden sind. Angegeben wird jedoch nicht wo und wie genau die Temperaturfühler angeordnet sind. Insbesondere zur Lage gibt es keine Angabe oder Anhaltspunkte.

Die GB2382646 offenbart eine Anordnung von Temperatursensoren zur schnellen Regelung des Wärmtauschers bei plötzlich einsetzendem Bedarf.

Weiterhin beschreibt die WO2001/042729 A1 eine Wärmetauscheranordnung eines mehrfachkombinierten U-Wärmetaschers mit einem in einem Durchgangskanal angeordneten Temperatursensor der jeweils die Temperatur des ein und denselben Fluidstroms an unterschiedlichen Stellen im Verlauf durch den Wärmtauscher erfasst. Nachteilig hieran ist die gezwungenermaßen kombinierte Temperaturmessung als Mischtemperatur, welche eine Regelung nur ungenau zulässt. Zudem ist der Gesamtaufbau äußerst kompliziert und somit nur mit erhöhtem Aufwand umsetzbar. Eine präzise Regelung ist nicht oder nur sehr beschränkt möglich.

Der Nachteil des Standes der Technik liegt darin begründet, dass keine der Temperaturmessungen geeignet ist, an geeigneter Stelle lastunabhängig, schnell und zugleich genau die Temperatur zu messen und dabei einfach mit geringem Aufwand umzusetzen und zu warten ist. Zudem erfolgt im Stand der Technik die Einbeziehung von Sensoren zur Strömungserkennung auf der Sekundärseite, die keine genauen Regelungsergebnisse ausführen, um eine konstante Temperatur zu generieren und für die zudem ein hoher Kostenaufwand notwendig ist.

Aufgabe der Erfindung ist es, eine Anordnung zur elektronischen Regelung für die Wassererwärmung über Plattenwärmetauscher zu realisieren, wobei aufgabengemäß die Nachteile des Standes der Technik beseitigt werden und an geeigneter Stelle lastunabhängig, schnell und zugleich genau arbeitet und dabei einfach mit geringem Aufwand umzusetzen und zu warten ist und dabei eine konstante Vorlauftemperatur auf der Sekundärseite des Plattenwärmetauschers gehalten wird

Die Aufgabe wird erfindungsgemäß dadurch gelöst, dass eine Anordnung zur elektronischen Regelung für die Wassererwärmung über Plattenwärmetauscher gemäß des Patentanspruches ausgeführt wird.

Dabei ist eine Anordnung zur elektronischen Regelung für die Wassererwärmung über Plattenwärmetauscher so entwickelt,
- dass ein zweiter Temperaturmessfühler auf der Sekundärseite des Plattenwärmetauschers im Rücklauf des Kaltwassers vorhanden ist und mit dem Regler verbunden ist,
- dass der zweite Temperaturmessfühler in der vorderen Hälfte der Eintrittskammer des Plattenwärmetauschers positioniert ist, wobei vorzugsweise der Plattenwärmetauscher mindestens fünf Kanäle aufweist und der zweite Temperaturmessfühler sich vom ersten bis zum fünften Kanal des Plattenwärmetauschers erstreckt.

Die erfindungsgemäße Anordnung stellt sich wie folgt dar.

Die genauere Regelung der sekundären Zieltemperatur wird mindestens mit zwei Temperaturmessfühlern in den Anschlüssen des Plattenwärmetauschers bzw. in den ersten bis fünften Kanälen über den Anschlüssen des Plattenwärmetauschers installiert. Diese Messwerte werden an den elektronischen Regler übertragen, ausgewertet und als Signal zum primären Volumenstromstellglied weitergeleitet.

Die Plattenwärmetauscher werden eingesetzt je nach Bedarf an Medien auf der Sekundärseite, um Medium von einer Temperatur auf eine andere Temperatur zu erwärmen bzw. zu kühlen. Für die Erwärmung bzw. Kühlung des Mediums wird ein Volumenstrom eines Mediums auf der Primärseite benötigt, welcher über den Plattenwärmetauscher dem Medium Wärmeenergie hinzufügt, erwärmt bzw. entzieht - Kühlung.

Der Plattenwärmetauscher trennt beide Medien voneinander, so dass ausschließlich die Wärmeenergie übertragen wird. Dadurch können sich die Medien nicht vermischen. Bevorzugt wird mittels Wärmeenergie ein Medium auf der Primärseite mit 65 bis 100 °C Vorlauftemperatur und auf der Sekundärseite ein Kaltwassermedium von 10 °C auf etwa 60 °C als Brauchwasser erwärmt. Dieses Brauchwasser im Vorlauf der Sekundärseite dient als normale Warmwasserzubereitung für Haushalte usw.

Die erfindungsgemäße Regelanordnung dient dazu, den Volumenstrom auf der Primärseite so genau zu regeln, dass die Zieltemperatur im Vorlauf der Sekundärseite trotz unterschiedlicher Lastschwankungen immer konstant bleibt. Vorzugsweise wird hier bei der Wassererwärmung für Haushalte usw. eine Temperatur von 60 °C vorgegeben. Der Regler kann bevorzugt ein DDC-Regler mit einem PID-Verhalten sein. Mit dem zweiten angeordneten Temperaturmessfühler wird eine sofortige Änderung der Mischtemperatur erfasst und über den Regler an das Volumenstromstellglied im Vorlauf der Primärseite ausgeführt.

Ziel ist es, den Vorlauf sekundärseitig konstant auf 60 °C trotz Laständerungen auf der Sekundärseite zu halten.

Mit einem Mischpunkt des zugeführten Kaltwassers, was eine normale Temperatur von ca. 10 °C aufweist, und dem Vorlaufkreis des Brauchwassers wird eine sofortige Temperaturveränderung über den zweiten Messfühler erfasst, womit über den Regler ein entsprechendes Signal an den Vorlauf Primärseite zum Volumenstromstellglied ausgeführt wird.

Durch diese erfindungsgemäße Anordnung des ersten und zweiten Temperaturmessfühlers im Vorlauf Sekundärseite und Rücklauf Sekundärseite, wird nun erreicht, dass eine konstante Vorlauftemperatur auf der Sekundärseite von 60 °C je nach Laständerung durch Verbrauchsanzapfung des Vorlaufes der Sekundärseite gegeben ist.

Der Regler arbeitet im Millisekundenbereich und kann eine sofortige Regelausrichtung dahingehend bewirken, dass bei jeglicher Laständerung auf der Sekundärseite trotzdem eine konstante Temperatur von 60 °C über den Plattenwärmetauscher für die Vorlauftemperatur Sekundärseite gehalten wird.

Die besten Regelergebnisse werden erfindungsgemäß mit der Anordnung des zweiten Temperaturmessfühlers in der vorderen Hälfte einer Eintrittskammer des Plattenwärmetauschers am Kaltwasseranschluss zwischen dem ersten und fünften Kanal ermittelt.

Im Ausführungsbeispiel ist eine Schaltungsanordnung der erfindungsgemäßen Anordnung zur elektronischen Regelung für die Wassererwärmung über einen Plattenwärmetauscher ausgeführt.

Dabei zeigen die
Figur 1 die Schaltungsanordnung mit elektronischer Regelung
Figur 2 eine nicht erfindungsgemäße Schaltungsanordnung
Figur 3 eine nicht erfindungsgemäße Schaltungsanordnung.

Der Plattenwärmetauscher 1 wird eingesetzt, um je nach Bedarf ein Medium auf der Sekundärseite von einer Temperatur x auf eine Temperatur y zu erwärmen bzw. zu kühlen. Für die Erwärmung bzw. Kühlung des Mediums wird ein Volumenstrom eines Mediums auf der Primärseite benötigt, welcher über den Plattenwärmetauscher 1 einem Medium auf der Sekundärseite Wärme hinzufügt bzw. entzieht-Kühlung.

Der Plattenwärmetauscher 1 trennt beide Medien voneinander, so dass ausschließlich die Wärmeenergie übertragen wird. Die Medien können sich somit nicht vermischen.

Dabei wird mittels einer Wärmeenergie des Wassers der Primärseite Vorlauf und Rücklauf mit einer Temperatur von 65 bis 130 °C über den Plattenwärmetauscher 1 das Kaltwasser, welches 10 °C als Zufuhrmedium aufweist, so erwärmt, dass eine Vorlauftemperatur auf der Sekundärseite von 60 °C erreicht wird.

Der Idealfall ist gegeben, wenn die Vorlauftemperatur auf der Sekundärseite konstant 60 °C beibehält, egal welche Laständerung im Sekundärkreislauf durch Verbraucher 7 stattfindet. Die zugeführte Wärmeenergie über die Primärseite wird mit einer Temperatur von 35 bis 130 °C Wassertemperatur eingespeist. Das Kaltwasser wird im Rücklauf der Sekundärseite mit einer entsprechenden Temperatur von ca. 10 °C über den Mischpunkt 5 eingebracht. Benutzt nun ein Endverbraucher 7 die Wassererwärmung über den Vorlauf, kühlt sich das Wasser zum Beispiel auf 55 °C ab. Durch den Mischpunkt 5 und die Vermischung des Kaltwassers mit dem Rücklauf des Brauchwasserkreises findet eine Temperaturveränderung statt. Diese Temperaturveränderung wird mit dem erfindungsgemäßen zweiten Temperaturmessfühler 6, welcher in dem Plattenwärmetauscher 1 in der vorderen Hälfte einer Eintrittskammer des Kaltwasseranschlusses installiert ist, erfasst, und über den Regler 2, welcher vorzugsweise ein DDC-Regler ist, wird ein entsprechendes Stellsignal an das Volumenstromstellglied 3 des Vorlaufes der Primärseite gegeben, um somit den Zufluss von mehr warmem Wasser auszuführen. Daraufhin wird durch den Kreislauf des Plattenwärmetauschers 1 im Vorlauf Sekundärseite die entsprechende Temperatur auf 60 °C Vorlauf eingestellt.

Durch die erfindungsgemäße Lösung der Installation des ersten Temperaturmessfühlers 4 am Anschluss des Vorlaufes im Sekundärkreislauf und des zweiten Temperaturmessfühlers 6 am Anschluss des Kaltwassers im Sekundärkreislauf und die Verbindung mit dem Regler 2 ist ein in Millisekunden stattfindendes reglungstechnisches Signal hin zum Volumenstromstellglied 3 gegeben.

Auf Grund der Ausführung des Reglers 2 als Software-Regler wird gewährleistet, dass eine konstante Vorlauftemperatur von 60 °C auf der Sekundärseite installiert ist. Erfingdungsgemäß wird der zweite Temperaturmessfühler 6 in Verbindung mit dem Regler 2 in der vorderen Hälfte der Eintrittskammer in den Plattenwärmetauscher 1 möglichst zwischen dem ersten und fünften Kanal des Plattenwärmetauschers angeordnet, um bestmögliche Temperaturergebnisse und reglungstechnische Auswirkungen zu erreichen.

Der schaltungstechnische Aufbau stellt sich so dar, dass ein Plattenwärmetauscher 1 bekannter Bauart gegeben ist. An der Primärseite ist ein Vorlauf und ein Rücklauf für eingespeiste Medien vorhanden, zum Beispiel mit 65 bis 130 °C Wassertemperatur. Im Vorlauf des Plattenwärmetauschers 1 befindet sich ein Volumenstromstellglied 3 in Verbindung mit dem Regler 2. Im Sekundärbereich findet eine Brauchwassererwärmung auf 60 °C im Vorlauf statt.

Dieses Warmwasser wird zu den Endverbrauchern 7 geleitet, welche dann je nach Bedarf eine Benutzung ausführen.

Die bestehende Zirkulationsleitung als Warmwasserleitung verbindet sich im Mischpunkt 5 mit dem zugeführten Kaltwasser, welches etwa 10 °C aufweist. Zwischen diesem Mischpunkt 5 und dem Anschluss Kaltwasser am Plattenwärmetauscher 1 ist ein zweiter Temperaturmessfühler 6 in Verbindung mit dem Regler 2 gegeben. Um die Vorlauftemperatur auf der Sekundärseite konstant zu messen, ist ein erster Temperaturmessfühler 4 am Anschluss Vorlauf sekundärseitig angeordnet, welcher ebenfalls mit dem Regler 2 verbunden ist.

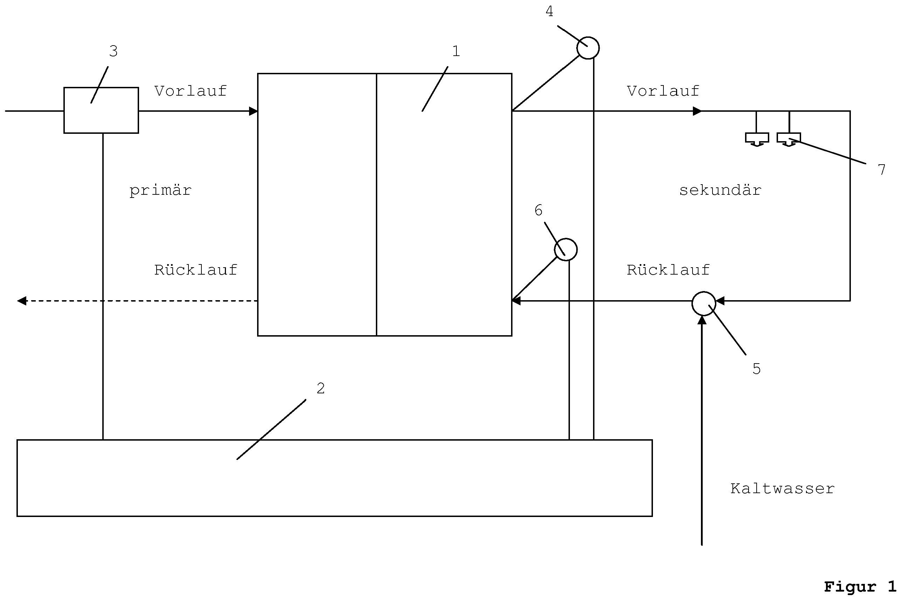

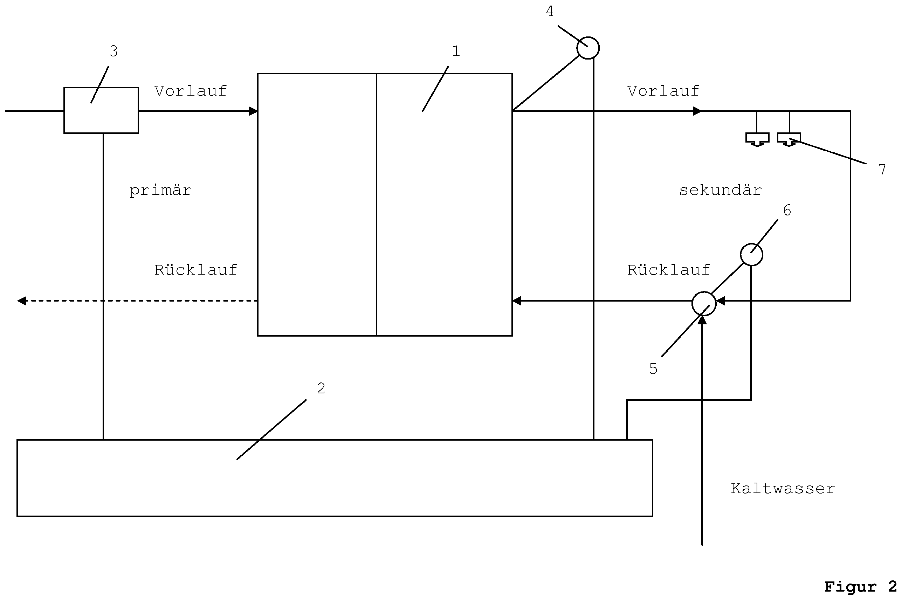

Die Figur 2 zeigt eine der Figur 1 ähnliche, jedoch nicht erfindungsgemäße Schaltungsanordnung. Der zweite Temperaturmessfühler 6 ist hier im Mischpunkt 5 angeordnet.

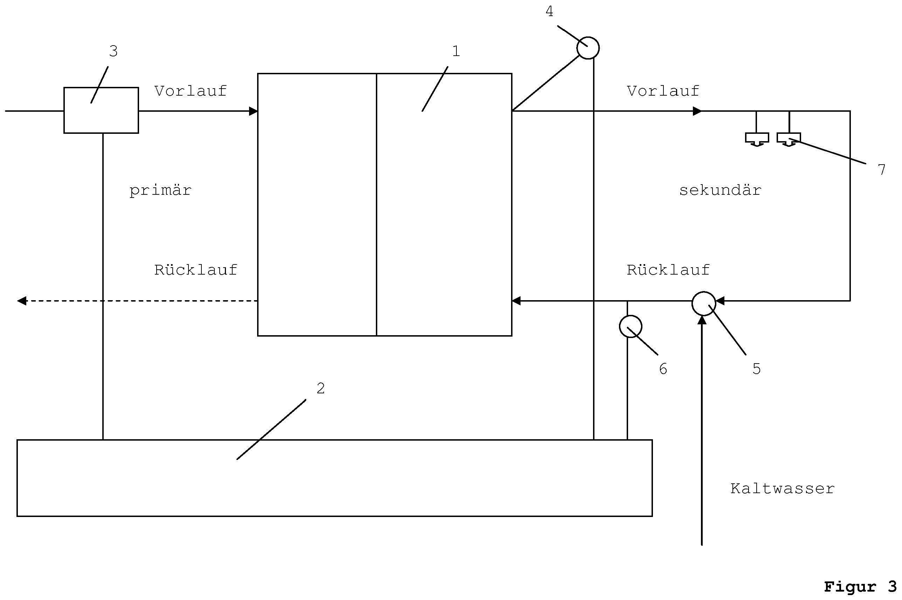

Des Weiteren ist in der ebenfalls nicht erfindunggemäßen Figur 3 der zweite Temperaturmessfühler 6 zwischen dem Mischpunkt 5 und dem Plattenwärmetauscher 1 angeordnet. Die jeweilige Position des zweiten Temperaturmessfühlers 6 hängt von der globalen Hardwarekompensation ab. Vorteilhafterweise muss aber nochmals hervorgehoben werden, dass der zweite Temperaturmessfühler 6 in der vorderen Eintrittskammer des Plattenwärmetauschers 1 zur Messung der Mischtemperatur aus Kaltwasser und Rücklauf Brauchwasser aus reglungstechnischer Sicht am besten platziert ist.

### Bezugszeichen

- 1: Plattenwärmetauscher
- 2: Regler
- 3: Volumenstromstellglied
- 4: erster Temperaturmessfühler
- 5: Mischpunkt
- 6: zweiter Temperaturmessfühler
- 7: Verbraucher

## Patentansprüche

1. Anordnung zur elektronischen Regelung für die Wassererwärmung über Plattenwärmetauscher, wobei auf der Primarseite des Plattenwärmetauschers (1) ein Volumenstromstellglied (3) im Vorlauf geschaltet und auf der Sekundärseite des Plattenwärmetauschers (1) am Anschluss des Vorlaufes ein erster Temperaturmessfühler (4) angeordnet ist und das Volumenstromstellglied (3) und der erste Temperaturfühler (4) mit einem Regler (2) verbunden sind und weiterhin ein zweiter Temperaturmessfühler (6) auf der Sekundärseite des Plattenwärmetauschers (1) im Rücklauf Brauchwasser und dem darin eingebrachten Kaltwasser in Verbindung mit einem Regler (2) vorhanden ist,
**dadurch gekennzeichnet,**
**dass** der zweite Temperaturmessfühler (6) in der vorderen Hälfte einer Eintrittskammer des Plattenwärmetauschers (1) zwischen einem ersten und fünften Kanal des Plattenwärmetauschers (1) positioniert ist.

## Claims

1. Claim for electronic control for water heating via plate heat exchanger, where on the primary side of the plate heat exchanger (1) a volume flow valve (3) is switched in the water supply and on the secondary side of the plate heat exchanger (1) at the connection of the water supply a first temperature measuring sensor (4) is located and the volume flow valve (3) and the first temperature sensor (4) are connected with a regulator (3) and furthermore a second temperature measuring sensor (6) is located on the secondary side of the plate heat exchanger (1) in the service water return and the cold water it contains in connection with a regulator (2),
**characterised in that**,
the second temperature measuring sensor (6) is positioned in the front half of an intake chamber of the plate heat exchanger (1) between a first and fifth channel of the plate heat exchanger (1).

## Revendications

1. Dispositif de régulation électronique pour le chauffage de l'eau via des échangeurs de chaleur à plaques, étant donné qu'un actionneur de débit volumique (3) est installé en amont sur le côté primaire de l'échangeur de chaleur à plaques (1) et qu'un premier capteur de température (4) est intégré sur le côté secondaire de l'échangeur de chaleur à plaques (1) au niveau du départ, que l'actionneur de débit volumique (3) et le premier capteur de température (4) sont reliés à un régulateur (2) et qu'un deuxième capteur de température (6) est présent sur le côté secondaire de l'échangeur de chaleur à plaques (I) dans le retour d'eau sanitaire et d'eau froide ajoutée en relation avec un régulateur (2),
**caractérisé en ce que**
le deuxième capteur de température (6) est positionné dans la partie avant d'une chambre d'entrée de l'échangeur de chaleur à plaques (1) entre un premier et un cinquième canal de l'échangeur de chaleur à plaques (1).
